# EUROPÄISCHE PATENTSCHRIFT

(11) **EP 0 453 804 B1**
(45) Veröffentlichungstag und Bekanntmachung des Hinweises auf die Patenterteilung: **17.11.1994**
(21) Anmeldenummer: 91104948.4
(22) Anmeldetag: 28.03.1991
(51) Int. Cl.: A01K 63/04, B01D 35/26

(54) **Filter für Aquarien**
Filter for aquarium
Filtre pour aquarium

(30) Priorität: 26.04.1990 DE 4013324
(43) Veröffentlichungstag der Anmeldung: 30.10.1991
(73) Patentinhaber: EHEIM GMBH & CO. KG, D-73779 Deizisau (DE)
(72) Erfinder: Thiemer, Helmut, Dipl.-Ing. (FH), W-8501 Allersberg (DE); Schöttner, Walter, W-7301 Deizisau (DE); Voss, Peter, W-7312 Kirchheim/Teck (DE)
(74) Vertreter: Kratzsch, Volkhard, Dipl.-Ing.

(56) Entgegenhaltungen:
- DE-C- 2 700 030
- DE-U- 8 804 333

## Beschreibung

Die Erfindung bezieht sich auf einen Filter für Aquarien der im Oberbegriff des Anspruchs 1 genannten Art.

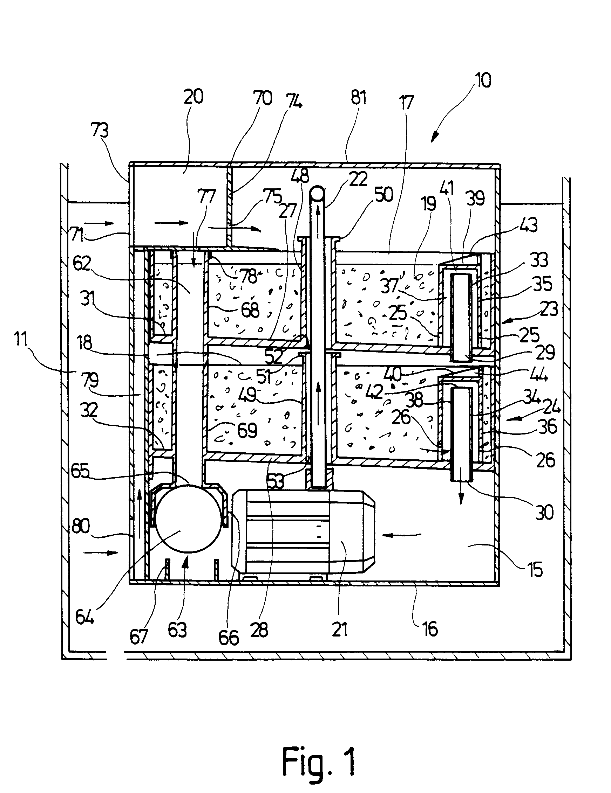

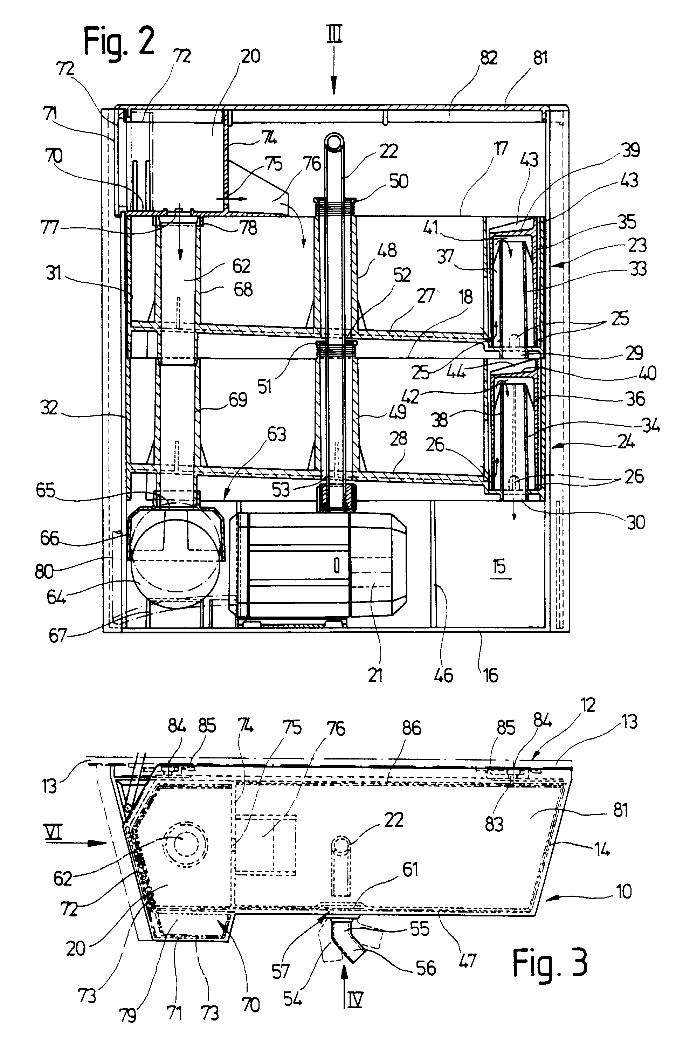

Es ist ein Filter dieser Art bekannt (DE-C-2 700 030, Fig. 2), der als alternierender Heb-Senk-Filter arbeitet. Dieser Filter ist als Außenfilter gebildet und über eine Zulaufleitung mit dem Aquariumbecken verbunden. Der Filter enthält nur ein Filterabteil. Der Zulauf erfolgt von oben nach dem Prinzip der Überlaufsaughebereinrichtung aus dem Aquarium in einen Raum oberhalb des Filterabteils. Unterhalb des Filterabteils ist eine Bodenkammer gebildet. In die Bodenkammer mündet eine umgekehrt U-förmige Leitung mit dem freien Rohrende ein, wobei in diese Leitung eine Pumpe geschaltet ist, die aus der Bodenkammer sich dort sammelndes Wasser absaugt und dieses über eine zum Aquariumbecken führende Rücklaufleitung in das Becken zurückführt. Ferner ist aus Sicherheitsgründen für den Fall einer Verstopfung des Filterabteils zwischen dem oberen Raum, wo die Zufuhr erfolgt, und der Bodenkammer eine Bypaßleitung vorgesehen, so daß bei verstopftem Filterabteil das oben zugeführte Wasser durch die Bypaßleitung direkt nach unten in die Bodenkammer gelangen kann. Die Absaugung des Wassers erfolgt immer im Bereich der Bodenkammer über das dort offene Ende des einen U-Schenkels. Beim Absaugzyklus sinkt der Wasserspiegel im Filterabteil nach unten ab. Die Ablaufmenge pro Zeiteinneit ist größer als die Zulaufmenge pro Zeiteinheit. Aufgrund dieser Gestaltung ergibt sich beim bekannten Filter ein Heb-Senk-Betrieb. Der Filter ist jedoch hinsichtlich der die Heb-Senk-Funktion bewirkenden Einrichtung kompliziert, da das umgekehrt U-förmige Rohr, an das die Pumpe angeschlossen ist, die Filtermasse im Filterabteil mit beiden Schenkeln durchsetzt. Bei einer anderen Variante dieses bekannten Filters (Fig. 1) kann der Filter auf höherem Niveau liegen als das Aquarium. Dann ist die Pumpe in die vom Aquarium kommende und zum Filter führende Zulaufleitung geschaltet, über die der Zulauf vom unten befindlichen Aquarium nach oben bewirkt wird. Der Ablauf aus der Bodenkammer des Filters und Zulauf zum Aquarium erfolgt nach dem Stechheber-Prinzip mittels einer umgekehrt U-förmigen Leitung, deren einer U-Schenkel sich durch die Filtermasse bis hin zur Bodenkammer erstreckt, während der andere U-Schenkel außerhalb des Filters verläuft und zum unten befindlichen Aquarium führt.

Der Erfindung liegt die Aufgabe zugrunde, einen Filter für Aquarien der eingangs genannten Art zu schaffen, bei dem die Einrichtung, die die Heb-Senk-Funktion bewirkt, einfach und kostengünstig gestaltet ist, eine Langzeitfunktion des Filters ermöglicht und jedes Filterabteil bedarfsweise problemlos vom Benutzer, also auch von Laien, aus dem Filter herausnehmbar ist.

Die Aufgabe ist bei einem Filter für Aquarien der eingangs genannten Art gemäß der Erfindung durch die Merkmale im Kennzeichnungsteil des Anspruchs 1 gelöst. Weitere vorteilha-te Erfindungsmerkmale ergeben sich aus den übrigen Ansprüchen 2 - 44.

Die jedem Filterabteil eigene Überlaufsaughebereinrichtung ist einfach und betriebssicher. Sie benötigt wenig Platz im Filterabteil, so daß dort ein großes Volumen an Filtermaterial untergebracht werden kann. Bei allem ist der Filter funktionssicher, und dies für Langzeitbetrieb. Sollte gleichwohl eine Reinigung od. dgl. erforderlich sein, kann selbst der Laie die einzelnen Komponenten des Filters schnell demontieren.

Weitere Einzelheiten und Vorteile der Erfindung ergeben sich aus der nachfolgenden Beschreibung.

Der vollständige Wortlaut der Ansprüche ist vorstehend zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: eine schematische Seitenansicht mit teilweisem Schnitt in vereinfachter Form eines Innenfilters in einem Aquarium,
- Fig. 2: eine schematische, teilweise Seitenansicht des Innenfilters in Fig. 1 mit Einzelheiten dieses,
- Fig. 3: eine Draufsicht in Pfeilrichtung III in Fig. 2,
- Fig. 4: eine Vorderansicht in Pfeilrichtung IV in Fig. 3,
- Fig. 5: einen schematischen Schnitt entlang der Linie V - V in Fig. 4,
- Fig. 6: eine Seitenansicht in Pfeilrichtung VI in Fig. 3,

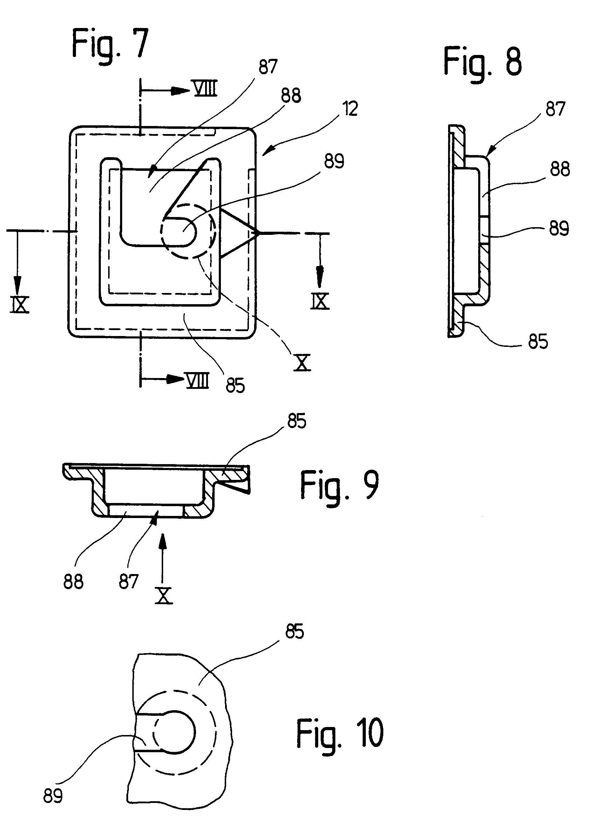

- Fig. 7: eine vergrößerte Seitenansicht einer Befestigungsplatte,
- Fig. 8 und 9: jeweils einen Schnitt entlang der Linie VIII-VIII bzw. IX - IX in Fig. 7,
- Fig. 10: eine vergrößerte Seitenansicht der Einzelheit X in Fig. 7.

In den Zeichnungen ist schematisch in Filter 10 für Aquarien gezeigt, der insbesondere als Innenfilter ausgebildet ist, der in einem nur schematisch angedeuteten Aquariumbecken 11 enthalten ist und dort mittels zweier gleichartiger Hängehalterungen 12 an einer Aqariumwand 13 herausnehmbar gehalten ist.

Der Filter 10 weist ein etwa kastenförmiges Gehäuse 14 z. B. aus Kunststoff auf. Im Gehäuse 14 befindet sich unten eine Bodenkammer 15 mit einem geschlossenen Boden 16. Oberhalb der Bodenkammer 15 ist mindestens ein Filterabteil vorgesehen. Beim gezeigten Ausführungsbeispiel sind zwei vertikal übereinander plazierte Filterabteile 17, 18 angeordnet, die beide Filtermaterial 19, z. B. Steine, Kies od. dgl., enthalten. Dem oberen Filterabteil 17 ist über einen Zulauf 20 in Pfeilrichtung Umgebungswasser aus dem Aquariumbecken 11, und dies - bezogen auf das obere Filterabteil 17 - von oben her zuführbar. Das Wasser ist nach Passieren des oberen Filterabteils 17 dem darunter befindlichen Filterabteil 18 und nach Passieren dieses der darunter befindlichen Bodenkammer 15 zuführbar und aus der Bodenkammer 15 mittels einer schematisch angedeuteten Pumpe 21 absaugbar. Das abgesaugte Wasser wird mittels der Pumpe 21 über eine daran angeschlossene Leitung 22 in das Aquariumbecken 11 zurückgeführt. Der Filter 10 arbeitet in bekannter Weise (DE-PS 27 00 030) als alternierender Heb-Senk-Filter. Die besondere Funktionsweise eines derartigen Heb-Senk-Filters und insbesondere die dadurch erreichte starke Sauerstoffanreicherung, ist in der vorgenannten Textstelle eingehend beschrieben, so daß zur Vermeidung von Wiederholungen darauf Bezug genommen werden kann.

Eine wesentliche Besonderheit des Filters 10 liegt darin, daß jedes Filterabteil 17, 18 zumindest eine Überlaufsaughebereinrichtung 23 bzw. 24 aufweist. Diese Überlaufsaughebereinrichtungen 23 bzw. 24 arbeiten nach dem Prinzip der Heberschleife, auch Prinzip des Pipettenspülers genannt. Jede dieser Einrichtungen 23, 24 kann auch als auf den Kopf gestellter Siphon betrachtet werden. Einzelheiten werden dazu nachfolgend erläutert. Bei jeder Überlaufsaughebereinrichtung 23, 24 ist deren Einlaß 25 bzw. 26 fußseitig und dabei etwa auf Höhe des Bodens 27 bzw. 28 des Filterabteils 17 bzw. 18 angeordnet. Der Auslaß 29 mündet zum darunter befindlichen Filterabteil 18, während der Auslaß 30 des untersten Filterabteils 18 nach unten zur Bodenkammer 15 mündet und diese speist. Bei jedem Filterabteil 17, 18 befindet sich dessen Überlaufsaughebereinrichtung 23 bzw. 24 an einer Seite, und zwar dabei bei allen Filterabteilen 17, 18 auf der gleichen Seite, so daß diese also in vertikaler Richtung untereinander stehen. Der Boden 27 bzw. 28 fällt zum Einlaß 25 bzw. 26 der zugeordneten Überlaufsaughebereinrichtung 23 bzw. 24 hin schräg ab.

Jedes Filterabteil 17, 18 weist einen als etwa offene Wanne ausgebildeten Filterbehälter 31 bzw. 32 auf, die völlig gleichartig ausgebildet, gegeneinander austauschbar und jeder für sich im Gehäuse 14 ebenfalls austauschbar und z. B. zu Reinigungszwecken leicht und problemlos entnehmbar sind. Sowohl das Gehäuse 14 als auch die Filterbehälter 31, 32 bestehen z. B. aus Kunststoff, und hierbei aus Kunststoffspritzteilen.

Jede Überlaufsaughebereinrichtung 23, 24 weist ein Auslaufrohr 33, 34 auf, das vom Boden 27 bzw. 28 her aufragt und vertikal verläuft. Mit seinem unteren Ende steht das Auslaufrohr 33, 34 über den Boden 27 bzw. 28 hinaus vor und bildet mit dem dort offenen Rohrende den Auslaß 29 bzw. 30. Das Auslaufrohr 33, 34 ist einstückiger Teil des Bodens 27 bzw. 28.

Ferner weist jede Überlaufsaughebereinrichtung 23, 24 ein oberseitig geschlossenes Ventilrohr 35 bzw. 36 auf, das unter Belassung eines radialen Ringraumes 37, 38 und dabei derart über das Auslaufrohr 33 bzw. 34 gestülpt ist, daß die geschlossene Oberseite 39 bzw. 40 des Ventilrohres 35, 36 unter Belassung eines axialen Überströmraumes 41 bzw. 42 in Abstand oberhalb des offenen oberen Endes des Auslaufrohres 33 bzw. 34 verläuft. Ersichtlich verläuft die jeweilige Oberseite 39, 40 des Ventilrohres 35 bzw. 36 mit Gefälle in Fig. 1 und 2 von rechts schräg nach links und unten zum Filterbehälter 31 bzw. 32 hin, so daß darauf von oben auftreffendes Wasser nach links hin abgeleitet wird. Das jeweilige Ventilrohr 35 bzw. 36 weist auf seiner Oberseite 39 bzw. 40 nach oben überstehende Leitwände 43 bzw. 44 auf, die eine schräge Wasserführungsrinne begrenzen. Das jeweilige Ventilrohr 35, 36 kann oberseitig im Querschnitt etwa ähnlich einer Schaufel gestaltet sein. Die Leitwände 43, 44 formen ein in Fig. 1 und 2 nach links hin offenes U und begünstigen die Ableitung des Wassers, das von oben darauf gelangt.

Jedes Ventilrohr 35, 36 enthält in seinem Rohrmantel fußseitige Durchlässe, die z. B. etwa torbogenförmig gestaltet sind. Diese Durchlässe bilden je Überlaufsaughebereinrichtung 23 bzw. 24 deren Einlaß 25 bzw. 26. Diese etwa torbogenförmigen Einlässe 25 bzw. 26 verteilen sich in Umfangsrichtung jedes Ventilrohres 35, 36. Durch diese kann im jeweiligen Filterbehälter 31 bzw. 32 stehendes Wasser hindurch in den Ringraum 37 bzw. 38 aufsteigen, wobei mit zunehmendem Wasserstand im jeweiligen Filterbehälter 31, 32 auch der Wasserstand in diesem Ringraum 37 bzw. 38 etwa entsprechend steigt, und zwar solange, bis der axiale Überströmraum 41, 42 und das oben offene Ende des Auslaufrohres 33 bzw. 34 erreicht wird. Ist dies der Fall, bei dem also das Wasser den Scheitelpunkt der Heberschleife erreicht hat, schnappt das Wasser über in das Auslaufrohr 33, 34 hinein, das vom Wasser durchströmt wird, wobei das Wasser das Auslaufrohr 33, 34 am offenen Ende durch dessen Auslaß 29 bzw. 30 verläßt. Ist diese Überschnappsituation erreicht, läuft das Wasser z. B. aus dem oberen Filterbehälter 31 ab bis zum unteren Ende des Ventilrohres 35. Es entleert sich also auf diese Weise der obere Filterbehälter 31 dann relativ schlagartig über die Überlaufsaughebereinrichtung 23 nach unten und in den darunter befindlichen Filterbehälter 32. Die Zulaufmenge des Wassers, das in den oberen Filterbehälter 31 eingeführt wird, ist kleiner als die Ablaufmenge. Nach dem gleichen beschriebenen Prinzip entleert sich auch der untere Filterbehälter 32 über die Überlaufsaughebereinrichtung 24 bei Erreichen des Überschnappegels, wobei die Entleerung durch den Auslaß 30 in die Bodenkammer 15 hinein geschieht. Die Pumpe 21 pumpt von dort das Wasser durch die Leitung 22 aus der Bodenkammer 15 ab und führt dieses Wasser wieder zurück in das Aquariumbecken 11. Die Pumpe 21 läuft kontinuierlich und pumpt kontinuierlich Wasser durch die Leitung 22 in das Aquariumbecken 11 zurück.

Wenn sich der obere Filterbehälter 31 in beschriebener Weise über die Überlaufsaughebereinrichtung 23 in den nächstfolgenden Filterbehälter 32 entleert, senkt sich der Wasserspiegel oberhalb des Bodens 27 bis hin zum Boden. Dadurch wird im Filterbehälter 31 Luft aufgenommen. Die Oberfläche des Filtermaterials 19 nimmt Luftsauerstoff auf. Anschließend an den Entleerungszyklus füllt sich der obere Filterbehälter 31, dem über den Zulauf 20 Wasser aus dem Aquarienbecken 11 zugeführt wird, wieder auf das Niveau, bei dem schließlich wieder das Überschnappen der Überlaufsaughebereinrichtung 23 geschieht.

Das jeweilige Ventilrohr 35, 36 stellt ein separates Bauteil dar und ist lösbar eingesetzt. Die Bodenkammer 15 weist an deren Seitenwandteilen hochführende Abstützstege 45, 46 auf, auf denen der darüber befindliche Filterbehälter 32 vertikal abgestützt ist. Die Filterbehälter 31,32 sind in Vertikalrichtung übereinandergesetzt und dabei so gestaltet, daß der untere Filterbehälter 32 den darüber befindlichen Filterbehälter 31 vertikal abstützen kann. Die innerhalb der Bodenkammer 15 angeordnete Pumpe 21 ist dort komplett isoliert einschließlich des hineingeführten Kabels.

Die an die Pumpe 21 angeschlossene Leitung 22, über die das Wasser aus der Bodenkammer 15 zurück in das Aquariumbecken 11 pumpbar ist, ist zentral durch das Gehäuse 14 und dabei von der Pumpe 21 durch die Bodenkammer 15 und die beiden Filterbehälter 31, 32 hindurch bis über die Höhe des Zulaufs 20 nach oben geführt. Oberhalb des Filterbehälters 31 ist die Leitung 22 quer durch eine Gehäusewand 47 hindurch nach außen geführt. Jeder einzelne Filterbehälter 31, 32 weist damit z. B. einstückige, vom Boden 27 bzw. 28 hochragende Rohrteile 48 bzw. 49 auf, die jeweils mit ihrem oberen Ende bedarfsweise über den oberen Rand des Filterbehälters 31, 32 überstehen und an diesem Ende eine Handhabe 50 bzw. 51 zum Anfassen aufweisen, die man gut ergreifen kann, so daß man daran hängend den jeweiligen Filterbehälter 31, 32 aus dem Gehäuse 14 herausheben kann. Die Leitung 22 ist durch eine Öffnung 52 bzw. 53 im Boden 27 bzw. 28 und durch den Rohrteil 48, 49 jedes Filterbehälters 31, 32 hindurch nach oben geführt.

In ihrem Auslaßbereich weist die Leitung 22 einen beweglichen und entsprechend den örtlichen Gegebenheiten verstellbaren Auslaufstutzen 54 auf, der aus zwei zueinander stumpfwinkligen, miteinander einstückigen Rohrstücken 55 und 56 gebildet ist und mittels eines Kugelgelenkes 57 verstellbar gehalten ist. Das Kugelgelenk 57 weist am einen Rohrteil 58 eine Kugelpfanne 59 und am Auslaufstutzen 54 ein Kugelsegment 60 auf, das in der Kugelpfanne 59 schwenkbeweglich aufgenommen ist. Der Rohrteil 58 mit Kugelpfanne 59 daran bildet eine einstückige Einheit. Er ist mitsamt dem mit seinem Kugelsegment 60 in die Kugelpfanne 59 eingesetzten Auslaufstutzen 54 in einer vorzugsweise nach oben offenen Aufnahme 61 in der Gehäusewand 47 lösbar eingesetzt. Der Auslaufstutzen 54 befindet sich in Abstand oberhalb des Zulaufs 20. Durch das Kugelgelenk 57 kann der Auslaufstutzen 54 bei Bedarf so geschwenkt werden, daß die Auslauföffnung des Rohrstücks 56 in die gewünschte Richtung weist. Ist z. B. der Filter 10 an einer Breitwand des Aquariumbeckens 11 angebracht, so ist eine Abströmung im Bereich des Rohrstückes 56 in Richtung etwa parallel zu dieser Breitwand des Aquarienbeckens 11 wünschenswert. Dazu läßt sich der Auslaufstutzen 54 in die in Fig. 3 gestrichelte Position schwenken, bei der das Rohrstück 56 zumindest in etwa horizontal und parallel zur Gehäusewand 47 verläuft. Es versteht sich, daß auch eine Schwenkbewegung statt in Fig. 3 nach rechts zu der linken Seite hin erfolgen kann. Ist statt dessen der Filter 10 z. B. an einer Schmalwand eines Aquariumbeckens 11 angebracht, ist eine Abströmung im Bereich des Rohrstückes 56 etwa rechtwinklig zur Gehäusewand 47 und somit etwa parallel zur Breitwand des Aquariumbeckens 11 wünschenswert. Zu diesem Zweck wird der Auslaufstutzen 54 im Kugelgelenk 57 so geschwenkt, daß das Rohrstück 56 etwa rechtwinklig zur Gehäusewand 47 ausgerichtet ist. Diese Position ist in Fig. 3 strichpunktiert angedeutet. Es versteht sich, daß der Auslaufstutzen 54 bedarfsweise im Kugelgelenk 57 auch so geschwenkt werden kann, daß das Rohrstück 56 z. B. schräg nach unten in Richtung zum Boden des Aquariumbeckens 11 gerichtet ist. Auch andere Schwenkpositonen des Auslaufstutzens 54 sind jederzeit bedarfsweise möglich.

Der Filter 10 ist ferner mit mindestens einer Bypaßleitung 82 ausgestattet, die die Bodenkammer 15 mit dem Einlauf 20 verbindet. An dem in die Bodenkammer 15 führenden Ende weist die Bypaßleitung 62 eine Ventileinrichtung 63 auf, die mittels eines Schwimmers 64 in Form einer z. B. aus Styropor bestehenden Schwimmerkugel gesteuert ist. Die Schwimmerkugel weist einen relativ großen Durchmesser auf. Dadurch ergibt sich eine geräuschlose Funktion. Dieser kugelförmige Schwimmer 64 wirkt so, daß er je nach Wasserstand in der Bodenkammer 15 und aufgrund seiner dementsprechenden Schwimmlage die Öffnung 65 des Leitungsendes der Bypaßleitung 62 entweder verschließt, wie Fig. 1 zeigt und wie auch Fig. 2 mit strichpunktierten Linien zeigt, oder bei absinkendem Wasserstand in der Bodenkammer 15 freigibt, wie Fig. 2 mit durchgezogenen Linien zeigt. Die Bypaßleitung 62 und die vom Schwimmer 64 gesteuerte Ventileinrichtung 63 verhindert ein Trockenlaufen der Pumpe 21 z. B. dann, wenn in die Bodenkammer 15 vom oberen Filterbehälter 32 her nicht ständig genug Wasser abgegeben wird. Dann fällt der Schwimmer 64 in seine geöffnete Stellung gemäß Fig. 2, wobei dann dem Zulauf 20 permanent zugeführtes Wasser durch die Bypaßleitung 62 in Pfeilrichtung hindurch in die Bodenkammer 15 eingesaugt und durch die Leitung 22 wieder abgeführt wird. Sobald der Wasserstand in der Bodenkammer 15 wieder entsprechend steigt, schwimmt der Schwimmer 64 auf, bis er die Öffnung 65 am unteren Ende der Bypaßleitung 62 verschließt. In diesem Zustand wird über die Bypaßleitung 62 kein Wasser von der Pumpe 21 abgesaugt. Dadurch, daß die Pumpe 21 ständig arbeitet, lassen sich Toleranzen bei der Zulaufmenge und der Ablaufmenge des Wassers ausgleichen. Eine Ansaugung von Luft ist durch die Bypaßleitung 62 und die schwimmergesteuerte Ventileinrichtung 63 verhindert, so daß also dadurch einerseits Schäden bei der Pumpe 21 vermieden sind und andererseits auch ein im Aquarium nicht gewünschter Sprudeleffekt ausgeschaltet ist. Man erkennt, daß die Bypaßleitung 62 mit schwimmergesteuerter Ventileinrichtung 63 keinen Einfluß auf die Funktion des eigentlichen Filtervorganges hat.

Der kugelförmige Schwimmer 64 ist in einem Käfig 66 am unteren Leitungsende der Bypaßleitung 62 frei beweglich gehalten, wobei der Käfig 66 z. B. von angeformten, fingerartigen Stegen od. dgl. gebildet ist. Der Käfig 66 stellt sicher, daß der kugelförmige Schwimmer 64 immer koaxial in Bezug auf die Bypaßleitung 62 ausgerichtet ist und bleibt. Vom Boden 16 der Bodenkammer 15 ragen Fußstege 67 hoch, mittels denen der Schwimmer 64 in seiner Öffnungsstellung (Fig. 2) vertikal abstützbar und ebenfalls so geführt ist, daß die zur Bypaßleitung 62 gegebene koaxiale Ausrichtung erhalten bleibt.

Die Bypaßleitung 62 ist aus einzelnen ineinandergreifenden Rohrstücken 68, 69 gebildet, die an den zugeordneten Filterbehältern 31 bzw. 32 vorzugsweise einstückig angeordnet sind. Das obere Rohrstück 68 erstreckt sich über den Boden 27 nach unten hinaus und endet in einem sich verjüngenden Ende, das in das oben offene Ende des Rohrstückes 69 des Filterbehälters 32 eingesteckt ist. Am über dessen Boden 28 nach unten vorstehenden Rohrstück 69 ist die Öffnung 65 gebildet und der Käfig 66 aufgeschoben.

Der Zulauf 20 weist einen oberhalb des oberen Filterbehälters 31 vorzugsweise lösbar eingesetzten und etwa kastenförmigen Käfig 70 auf, dessen Vorderwand 71 und z. B. schräge Seitenwand 72 Durchbrüche 73, z. B. vertikal gerichtete Schlitze, für den Einlaß von Umgebungswasser in den Käfig 70 hinein aufweist. Der Käfig 70 enthält in einer inneren Querwand 74 bodennah eine Auslaßöffnung 75, deren Größe die Zulaufmenge des Wassers in den Filter 10 vorgibt. Der Öffnungsquerschnitt der Auslaßöffnung 75 könnte bedarfsweise verstellbar sein. In aller Regel ist dies aber nicht wünschenswert, so daß die Auslaßöffnung 75, z. B. in Form einer Bohrung, fest eingestellt ist und bleibt und vom Benutzer nicht beeinflußbar ist. An die innere Querwand 74 schließt sich eine im Querschnitt z. B. etwa U-förmige und weiter zum Gehäuseinneren führende Leitrinne 76 für das zulaufende Wasser an, wobei die Leitrinne 76 den nach oben offenen, oberen Filterbehälter 31 etwa dachförmig übergreift und etwa bis zu dessen Mitte führt, wo die Abgabe des durch die Auslaßöffnung 75 hindurchgelangenden Wassers in den darunter befindlichen Filterbehälter 31 erfolgt. Der Käfig 70 weist einen eine Bodenöffnung 77 umgebenden Auslaßstutzen 78 auf seiner Unterseite auf, an den das nach oben ragende Rohrstück 68 des oberen Filterbehälters 31 angeschlossen ist, so daß dadurch der Anschluß der Bypaßleitung 62 an den Käfig 70 geschieht.

Der Filter 10 weist einen gegenüber dem Inneren des Gehäuses 14 abgeschlossenen Außenkanal 79 auf, der bei der Betrachtung gemäß Fig. 2 und 3 z. B. auf der dort linken Vorderseite des Gehäuses 14 plaziert sein kann. Dieser Außenkanal 79 führt vom Niveau des Bodens 16 nach oben bis zum Zulauf 20 mit dem dortigen Käfig 70, wobei das kastenförmige Innere des Käfigs 70 mit diesem Auslaßkanal 79 in Verbindung steht. Der Auslaßkanal 79 ist in seinem unteren Bereich, nahe des Bodens 16, mit Durchbrüchen 80, z. B. Schlitzen, für den dortigen Einlaß von Umgebungswasser in den Außenkanal 79 hinein versehen. Der Außenkanal 79 mit den oberhalb des Niveaus des Bodens 16 befindlichen Durchbrüchen 60 erlaubt dadurch eine Tiefenabsaugung; denn durch die Durchbrüche 80 gelangt Aquariumwasser in den Außenkanal 79 und von dort nach oben in den Bereich des Zulaufs 20 mit dortigem Käfig 70. Sollte durch Verunreinigungen od. dgl. Störungen der obere Einlaß in Form der Durchlässe 73 in den Wänden 71 und 72 verschlossen oder im Querschnitt zumindest stark reduziert sein, so kann gleichwohl durch die Tiefenabsaugung, und zwar die Durchbrüche 80 im unteren Bereich des Außenkanals 79,nach wie vor Wasser aus dem Aquariumbecken 11 angesaugt werden, das in den Zulauf 20 mit Käfig 70 gelangt und, je nach Stellung der schwimmergesteuerten Ventileinrichtung 63, durch die Bypaßleitung 62 zur Pumpe 21 und von dort zurück über die Leitung 22 in das Aquariumbecken 11. Die Bypaßleitung 62 und deren schwimmergesteuerte Ventileinrichtung 63 gewährleistet auch dann einen störungsfreien Lauf der Pumpe 21 und Wasserumlauf, wenn z. B. die beiden Filterbehälter 31, 32 sich zugesetzt haben sollten und nur noch sehr wenig Wasser in vertikaler Richtung im Hub-Senk-Betrieb durchlassen. Dann reduziert sich das Niveau in der Bodenkammer 15, so daß der Schwimmer 64 in die Öffnungsstellung geht und die Pumpe 21 Wasser über die Bypaßleitung 62 ansaugt, wobei dieses Wasser aus dem Zulauf 20 mit Käfig 70 stammt und in diesen durch die Durchlässe 73 und/oder durch die Durchlässe 80 im Außenkanal 79 und durch letzteren zugeführt wird.

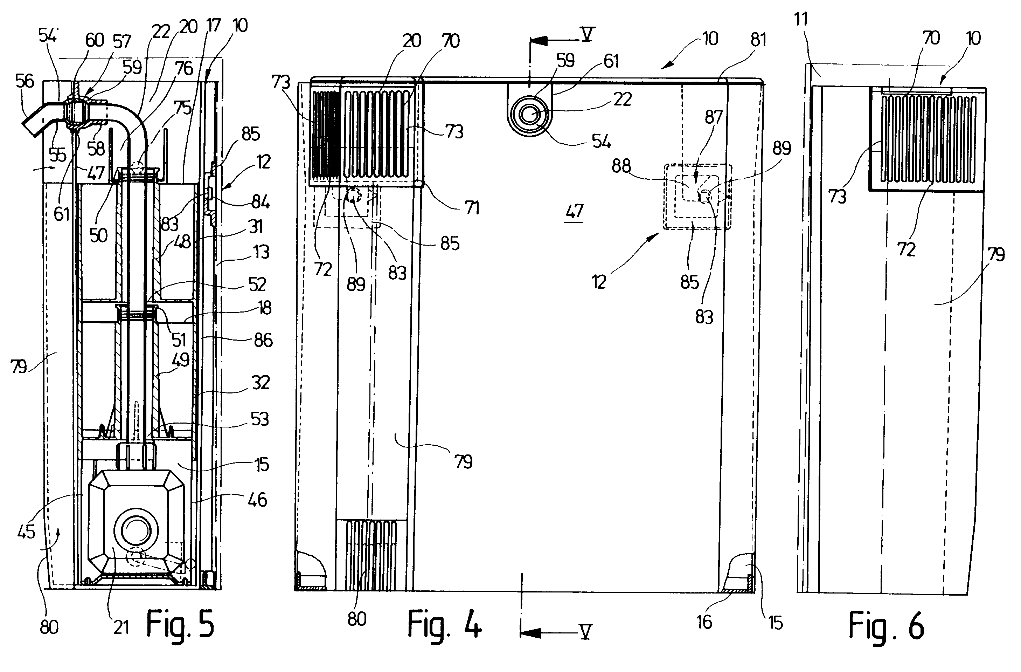

Das Gehäuse 14 ist am oberen Ende mittels eines lösbaren Deckels 81 abgedeckt. Wie in Fig. 2 nur schematisch dargestellt ist, kann der Deckel 81 mit einer Dämmplatte 82 z. B. auf seiner Innenseite versehen sein, die eine zusätzliche Geräuschdämmung und Isolierung bewirkt. Die Dämmplatte 82 besteht aus zu diesem Zweck geeignetem Dämmaterial, wobei die Innenseite auch noch in Form einzelner pyramidenartiger Vorsprünge oder in sonstiger Weise zur erhöhten Dämmung gestaltet sein kann. Statt dessen kann der Deckel 81 auch selbst als Dämmplatte ausgebildet sein, d. h., z. B. mit vorgenannten Vorsprüngen versehen sein.
Die Hängehalterung 12, mittels der der Filter 10 an der Aquariumwand 13 lösbar angehängt ist, ist an zwei in horizontaler Richtung beabstandeten Stellen vorgesehen und jeweils identisch. Jede Hängehalterung 12 weist einerseits einen Vorsprung 83 mit pilzförmig verdicktem Kopf 84 auf und andererseits eine zugeordnete Befestigungsplatte 85.
Der Vorsprung 83 mit verdicktem Kopf 84 ist z. B. lösbar an der Rückwand 86 des Gehäuses 14 befestigt. Die zugeordnete Befestigungsplatte 85 ist an einer Wand des Aquariumbeckens 11 befestigbar, z. B. anklebbar. Jede Befestigungsplatte 85 enthält einen oben offenen, winkelförmigen Einhängeschlitz 87, der einen vertikalen Einführungsschlitz 88 aufweist, welcher in einen vorzugsweise schmaleren, horizontalen Riegelschlitz 89 übergeht, der bei beiden Befestigungsplatten 85 in Fig. 4 nach rechts hin ausgerichtet ist. Der vertikale Einführungsschlitz 88 ist zum Toleranzausgleich z. B. wesentlich breiter als der Vorsprung 83 aber schmaler als dessen Kopf 84 bemessen, während der horizontale, jeweils nach rechts abgehende Riegelschlitz 89 kleiner als der Kopf 84 und z. B. etwa so groß dimensioniert ist, wie der Querschnitt des Vorsprunges 83. Auf diese Weise kann der Filter 10 mit den Köpfen 84 vorweg an die jeweils zugeordnete Befestigungsplatte 85 heranbewegt und mit dem Kopf 84 in den Einführungsschlitz 88 eingebracht werden, woraufhin bei einer sich anschließenden Bewegung nach rechts der Vorsprung 83 in den horizontalen, nach rechts führenden Riegelschlitz 89 einfährt und dabei der verdickte Kopf 84 die Befestigungsplatte 85 im Bereich des Riegelschlitzes 89 rückseitig übergreift. Der Filter 10 ist somit gegen Bewegungen in vertikaler Richtung sowie nach rechts sicher fixiert. Im horizontalen Riegelschlitz 89 kann z. B. durch Verengung im Einmündungsbereich in den Einführungsschlitz 88 eine kunststoffelastische Verrastung gebildet sein, die nach dem Einfahren des Vorsprungs 83 in den Riegelschlitz 89 hinter diesem einrastet und eine Sicherung gegen horizontales Zurückschieben nach rechts bildet.

Der beschriebene Filter 10 arbeitet als alternierender Heb-Senk-Filter. Aufgrund seiner Gestaltung als Innenfilter läßt er sich schnell und einfach in ein Aquariumbecken 11, und dort an jeweils gewünschter Stelle, einhängen. Es erfolgt ein mehrstufiger Ablauf der Filtrierung, wobei das zu reinigende Aquariumwasser vom ersten Filterbehälter 31 nach einer Einwirkungszeit dort in den nächstfolgenden darunter befindlichen Filterbehälter 32 abgegeben wird und dort eine nochmalige Filtrierung geschieht. Die Steuerung des zyklischen Heb-Senk-Vorganges je Filterbehälter 31, 32, die durch die zugeordnete Überlaufsaughebereinrichtung 23 bzw. 24 bewirkt wird, erfolgt ohne irgendwelche mechanisch betätigten oder bewegten Teile. Sie ist somit keinerlei Verschleiß unterworfen. Es besteht auch keinerlei Gefahr, daß sich irgendwelche Teile verklemmen, für Relativbewegungen etwaiger beweglicher Teile vorgesehene Spalte sich allmählich zusetzen oder sonstige Störungen vorkommen. Die Überlaufsaughebereinrichtungen 23, 24 sind wartungsfrei. Sie sind zuverlässig und auf Dauer wirksam, so daß der Filter 10 als Langzeitfilter störungsfrei und ohne Notwendigkeit einer Reinigung, Wartung od. dgl. arbeiten kann. Der Filter 10 ist einfach und kostengünstig. Dadurch, daß die Filterbehälter 31, 32 und bei drei oder mehr Filterbehältern auch entsprechende weitere Filterbehälter identisch und gegeneinander austauschbar sind, werden die Kosten weiter reduziert. Der Filter 10 stellt ein offenes Filtersystem dar, bei dem die einzelnen Filterbehälter 31, 32 als offene Wannen mit Überlaufsaughebern ausgeführt sind und dabei weder in Bezug zueinander abgedichtet sind noch gegenüber dem Gehäuse 14 des Filters 10. Derartige Abdichtungen sind nicht nötig, was ebenfalls zu geringem Aufwand und zur Vereinfachung, auch zur erleichterten Demontage und Montage, beiträgt. Man erkennt, daß das Wasser aus dem Aquariumbecken 11 allein durch Schwerkraft in das Gehäuse 14 des Filters 10 gelangt, und zwar im Bereich des Zulaufs 20. Somit ist auch dazu keine besondere mechanische Einrichtung erforderlich. Die einzelnen Filterdurchlaufzyklen sind unabhängig von der Leistung der Pumpe 21. Die Pumpe 21 läuft vorzugsweise kontinuierlich, wobei durch die Bypaßleitung 62 mit schwimmergesteuerter Ventileinrichtung 63 der Gefahr eines eventuellen Trockenlaufes vorgebeugt ist, da dann die Ventileinrichtung 63 selbsttätig öffnet und über die Bypaßleitung 62 ungefiltertes Wasser von der Pumpe 21 angesaugt und durch die Leitung 22 wieder abgegeben wird. Dadurch, daß das Wasser nacheinander mehrere untereinander plazierte Filterbehälter 31, 32 und erforderlichenfalls auch weitere durchläuft, ergibt sich eine gute Filterwirkung. Zusätzlich ergibt sich eine längere Lufteinwirkzeit, aus der eine starke Sauerstoffanreicherung des zu reinigenden Wassers resultiert. Es ist eine hohe Filterleistung bei großer Funktionssicherheit auf lange Zeit erreicht.

## Patentansprüche

1. Filter für Aquarien, mit einem Gehäuse (14), in dem in Abstand oberhalb einer Bodenkammer (15) mindestens ein Filterabteil (17, 18) für Filtermaterial (19) enthalten ist, dem über einen Zulauf (20) Wasser von oben her zuführbar ist, das nach Passieren des mindestens einen Filterabteils (17, 18) der Bodenkammer (15) zuführbar ist und aus dieser mittels einer Pumpe (21) absaugbar und über eine daran angeschlossene Leitung (22) in das Aquarium (11) zurückführbar ist, wobei der Filter (10) als alternierender Heb-Senk-Filter arbeitet, **dadurch gekennzeichnet**, daß jedes Filterabteil (17, 10) zumindest eine Überlaufsaughebereinrichtung (23, 24) aufweist, deren Einlaß (25, 26) fußseitig und dabei etwa auf Höhe des Bodens (27, 28) des Filterabteils (17, 18) angeordnet ist und deren Auslaß (29, 30) nach unten zu einem nächstfolgenden Filterabteil (18) bzw. zur Bodenkammer (15) ausmündet, und daß jedes Filterabteil (17, 18) einen als etwa offene Wanne ausgebildeten Filterbehälter (31, 32) aufweist.

2. Filter nach Anspruch 1, **gekennzeichnet durch** zwei oder mehrere übereinander angeordnete, gleichartige Filterabteile (17, 18), bei denen der Auslaß (29) der Überlaufsaughebereinrichtung (23) des oberen Filterabteils (17) in das darunter befindliche Filterabteil (18) ausmündet und für dieses (18) den Wasserzulauf bildet und der Auslaß (30) des zuunterst angeordneten Filterabteils (18) in die Bodenkammer (15) ausmündet.

3. Filter nach Anspruch 1 oder 2, **dadurch gekennzeichnet**, daß bei jedem Filterabteil (17, 18) die Überlaufsaughebereinrichtung (23, 24) an einer Seite, und dabei bei allen Filterabteilen (17, 18) auf der gleichen Seite, angeordnet ist und daß der Boden (27, 28) jedes Filterabteils (17, 18) zum Einlaß (25, 26) der zugeordneten Überlaufsaughebereinrichtung (23, 24) hin schräg abfällt.

4. Filter nach Anspruch 3, **dadurch gekennzeichnet**, daß die mehreren Filterbehälter (31, 32) gleichartig ausgebildet und austauschbar im Gehäuse (14) gehalten sind.

5. Filter nach einem der Ansprüche 1 - 4, **dadurch gekennzeichnet**, daß jede Überlaufsaughebereinrichtung (23, 24) ein etwa vertikales, vom Boden (27, 28) her aufragendes Auslaufrohr (33, 34) aufweist, dessen unteres Ende den Auslaß (29, 30) enthält und vorzugsweise über den Boden (27, 28) nach unten vorsteht.

6. Filter nach Anspruch 5, **dadurch gekennzeichnet**, daß das Auslaufrohr (33, 34) einstückiger Teil des Bodens (2, 28) ist.

7. Filter nach einem der Ansprüche 1 - 6, **dadurch gekennzeichnet**, daß jede Überlaufsaughebereinrichtung (23, 24) ein oberseitig geschlossenes Ventilrohr (35, 36) aufweist, das unter Belassung eines radialen Ringraumes (37, 38) und so über das Auslaufrohr (33, 34) gestülpt ist, daß die beschlossene Oberseite (39, 40) des Ventilrohres (35, 36) unter Belassung eines axialen Überströmraumes (41, 42) in Abstand oberhalb des offenen oberen Endes des Auslaufrohres (33, 34) verläuft.

8. Filter nach Anspruch 7, **dadurch gekennzeichnet**, daß die Oberseite (39, 40) des Ventilrohres (35, 36) mit Gefälle schräg zum Filterbehälter (31, 32) verläuft.

9. Filter nach Anspruch 7 oder 8, **dadurch gekennzeichnet**, daß das Ventilrohr (35, 36) auf seiner Oberseite (39, 40) nach oben überstehende Leitwände (43, 44) aufweist, die eine schräge Wasserführungsrinne begrenzen.

10. Filter nach einem der Ansprüche 7 - 9, **dadurch gekennzeichnet**, daß das Ventilrohr (35, 36) oberseitig im Querschnitt etwa einer Schaufel ähnlich gestaltet ist.

11. Filter nach einem der Ansprüche 7 - 10, **dadurch gekennzeichnet**, daß das Ventilrohr (35, 36) in seinem Rohrmantel fußseitige Durchlässe enthält, die den Einlaß (25, 26) der Überlaufsaughebereinrichtung (23, 24) bilden.

12. Filter nach Anspruch 11, **dadurch gekennzeichnet**, daß die Durchlässe etwa torbogenförmig gestaltet sind.

13. Filter nach einem der Ansprüche 7 - 12. **dadurch gekennzeichnet**, daß das Ventilrohr (35, 36) lösbar eingesetzt ist.

14. Filter nach einem der Ansprüche 1 - 13, **dadurch gekennzeichnet**, daß die Bodenkammer (15) an ihren Seitenwandteilen hochführende Abstützstege (45, 46) aufweist, auf denen das darüber befindliche Filterabteil (18), insbesondere dessen Filterbehälter (32), vertikal abgestützt ist.

15. Filter nach einem der Ansprüche 3 - 14, **dadurch gekennzeichnet**, daß die Filterbehälter (31, 32) in Vertikalrichtung übereinandergesetzt sind und sich gegenseitig abstützen.

16. Filter nach einem der Ansprüche 1 - 15, **dadurch gekennzeichnet**, daß die Pumpe (21) innerhalb der Bodenkammer (15) angeordnet ist.

17. Filter nach einem der Ansprüche 1 - 16, **dadurch gekennzeichnet**, daß die an die Pumpe (21) angeschlossene Leitung (22), über die das Wasser aus der Bodenkammer (15) zurück in das Aquariumbecken (11) pumpbar ist, zentral durch das Gehäuse (14) und dabei von der Pumpe (21) durch den oder die Filterabteile (17, 18) insbesondere Filterbehälter (31, 32), hindurch bis etwa zur Höhe des Zulaufs (20) geführt ist und vorzugsweise quer durch eine Gehäusewand (47) hindurch nach außen geführt ist.

18. Filter nach einem der Ansprüche 7 - 17, **dadurch gekennzeichnet**, daß die einzelnen Filterbehälter (31, 32) von deren Boden (27, 28) hochragende, damit vorzugsweise einstückige, Rohrteile (48, 49) aufweisen und daß die Leitung (22) durch eine Öffnung (52, 53) im Boden (27, 28) und durch den Rohrteil (48, 49) jedes Filterbehälters (31, 32) hindurch nach oben geführt ist.

19. Filter nach Anspruch 18, **dadurch gekennzeichnet**, daß jeder Rohrteil (48, 49) an seinem oberen Ende, das vorzugsweise über den oberen Rand des Filterbehälters (31, 32) übersteht, eine Handhabe (50, 51) zum Erfassen von Hand aufweist.

20. Filter nach einem der Ansprüche 1 - 19, **dadurch gekennzeichnet**, daß die Leitung (22) in ihrem Auslaßbereich einen beweglichen und verstellbaren Auslaufstutzen (54) aufweist.

21. Filter nach Anspruch 20, **dadurch gekennzeichnet**, daß der Auslaufstutzen (54) aus zwei zueinander stumpfwinkligen, miteinander einstückigen Rohrstücken (55, 56) gebildet ist.

22. Filter nach Anspruch 20 oder 21, **dadurch gekennzeichnet**, daß der Auslaufstutzen (64) mittels eines Kugelgelenks (57) verstellbar gehalten ist.

23. Filter nach Anspruch 22, **dadurch gekennzeichnet**, daß das Kugelgelenk (57) einen Rohrteil (58) mit Kugelpfanne (59) und am Auslaufstutzen (54) ein in der Kugelpfanne (59) aufgenommenes Kugelsegment (60) aufweist.

24. Filter nach Anspruch 23, **dadurch gekennzeichnet**, daß der Rohrteil (56) mit Kugelpfanne (59) und darin gelagertem Auslaufstutzen (54) in eine vorzugsweise nach oben offene Aufnahme (61) in einer Gehäusewand (47) lösbar eingesetzt ist.

25. Filter nach einem der Ansprüche 1 - 24, **dadurch gekennzeichnet**, daß der Auslaufstutzen (54) in Abstand oberhalb des Zulaufs (20) angeordnet ist.

26. Filter nach einem der Ansprüche 1 - 25, **gekennzeichnet durch** zumindest eine Bypaßleitung (62), die die Bodenkammer (15) mit dem Zulauf (20) verbindet.

27. Filter nach Anspruch 26, **dadurch gekennzeichnet**, daß die Bypaßleitung (62) am in die Bodenkammer (15) führenden Ende eine mittels Schwimmers (64) gesteuerte Ventileinrichtung (63) aufweist.

28. Filter nach Anspruch 27, **dadurch gekennzeichnet**, daß die Ventileinrichtung (63) eine Schwimmerkugel (64) aufweist, die je nach Wasserstand in der Bodenkammer (15) und Schwimmlage die Öffnung (65) des Leitungsendes der Bypaßleitung (62) verschließt oder freigibt.

29. Filter nach Anspruch 26, **dadurch gekennzeichnet**, daß die Schwimmerkugel (64) in einem Käfig (66) am Leitungsende der Bypaßleitung (62) frei beweglich gehalten ist.

30. Filter nach Anspruch 28 oder 29, **dadurch gekennzeichnet**, daß vom Boden (16) der Bodenkammer (15) Fußstege (67) hochragen, mittels denen die Schwimmerkugel (64) in der Öffnungsstellung vertikal abstützbar ist.

31. Filter nach einem der Ansprüche 26 - 30, **dadurch gekennzeichnet**, daß die Bypaßleitung (62) aus einzelnen ineinandergreifenden Rohrstücken (68, 69) gebildet ist, die an den Filterbehältern (31, 32), vorzugsweise einstückig, angeordnet sind.

32. Filter nach einem der Ansprüche 1 - 31, **dadurch gekennzeichnet**, daß der Zulauf (20) einen oberhalb des obersten Filterabteils (17), insbesondere Filterbehälters (31), vorzugsweise lösbar eingesetzten, etwa kastenförmigen Käfig (70) aufweist, dessen Vorderwand (71) und/oder z. B. schräge Seitenwand (72) Durchlässe (73), z. B. Schlitze, für den Einlaß von Umgebungswasser in den Käufig (70) aufweist.

33. Filter nach Anspruch 32, **dadurch gekennzeichnet**, daß der Käfig (70) in einer inneren Querwand (74) bodennah eine Auslaßöffnung (75) enthält, deren Größe die Zulaufmenge des Wassers in das obere Filterabteil (17), insbesondere den oberen Filterbehälter (31), vorgibt.

34. Filter nach Anspruch 32 oder 33, **dadurch gekennzeichnet**, daß sich an die innere Querwand (74) eine im Querschnitt z. B. etwa U-förmige und weiter zum Inneren führende Leitrinne (76) für das zulaufende Wasser anschließt.

35. Filter nach einem der Ansprüche 32 - 34, **dadurch gekennzeichnet**, daß der Käfig (70) einen eine Bodenöffnung (77) umgebenden Anschlußstutzen (78) auf seiner Unterseite aufweist, an den die Bypaßleitung (62) mit einem Rohrstück (68) des obersten Filterabteils (17), insbesondere Filterbehälters (31), anschließbar ist.

36. Filter nach einem der Ansprüche 1 - 35, **gekennzeichet durch** einen gegenüber dem Inneren des Gehäuses (14) abgeschlossenen Außenkanal (79), der etwa vom Bodeniveau des Gehäuses (14) ausgeht und nach oben führt und an dessen oberes Ende der Käfig (70) des Zulaufs (20) angeschlossen ist.

37. Filter nach Anspruch 36, **dadurch gekennzeichnet**, daß zumindest im unteren Bereich des Außenkanals (79) Durchbrüche (80), z. B. Schlitze, für den dortigen Einlaß von Umgebungswasser in den Außenkanal (79) vorgesehen sind.

38. Filter nach einem der Ansprüche 1 - 37, **dadurch gekennzeichnet**, daß das Gehäuse (14) am oberen Ende mittels eines lösbaren Deckels (81) abgedeckt ist.

39. Filter nach Anspruch 38, **dadurch gekennzeichnet**, daß der Deckel (81) selbst als Dämmplatte ausgebildet oder mit einer Dämmplatte (82) versehen ist.

40. Filter nach einem der Ansprüche 1 - 39, **gekennzeichnet durch** die Ausbildung als im Aquariumbecken (11) anordenbarer Innenfilter.

41. Filter nach einem der Ansprüche 1 - 40, **gekennzeichnet durch** eine Hängehalterung 12), die einerseits etwa pilzförmige Vorsprünge (83) und andererseits je eine zugeordnete Befestigungsplatte (85) aufweist, welche einen winkelförmigen Einhängeschlitz (87) mit einem vertikalen Einführungsschlitz (88), der in einen vorzugsweise schmaleren horizontalen Riegelschlitz (89) übergeht, enthält.

42. Filter nach Anspruch 41, **dadurch gekennzeichnet**, daß der horizontale Riegelschlitz (89) eine Rasteinrichtung zum Verrasten des eingebrachten Vorsprungs (83) aufweist.

43. Filter nach Anspruch 41 oder 42, **dadurch gekennzeichnet**, daß die etwa pilzförmigen Vorsprünge (83) z. B. lösbar an einer Gehäusewand (86) vorgesehen sind und daß die jeweils zugeordnete Befestigungsplatte (85) an einer Aquariumwand (13) befestigbar, z. B. anklebbar, ist.

44. Filter nach einem der Ansprüche 1 - 43, **gekennzeichnet durch** die Ausbildung aus Kunststoff.

## Claims

1. Aquarium filter with a housing (14) containing at least one filter compartment (17, 18) for filter material arranged at a distance above a base chamber (15), to which water may be supplied from above via a feed pipe (20), which after passing through the at least one filter compartment (17, 18), may be supplied to the base chamber (15) and sucked from this by means of a pump (21) and returned to the aquarium (11) via a pipe (22) connected to said pump (21), wherein the filter (10) operates as an alternating lift and drop filter, characterized in that each filter compartment (17, 18) has at least one overflow siphon (23, 24), the inlet of which is arranged on the base side and approximately at the level of the base (27, 28) of the filter compartment (17, 18), and the outlet (29, 30) of which feeds downwards into the next filter compartment (18) below or into the base chamber (15), and that each filter compartment (17, 18) has a filter container (31, 32) in the form of an essentially open trough.

2. Filter according to Claim 1, characterized by two or several similar filter compartments (17, 18) arranged one above the other, wherein the outlet (29) of the overflow siphon (23) of the upper filter compartment (17) feeds into the filter compartment (18) located below it and forms the water feed pipe for this filter compartment (18), and the outlet (30) of the bottom filter compartment (18) feeds into the base chamber (15).

3. Filter according to Claim 1 or 2, characterised in that in each filter compartment (17, 18) the overflow siphon (23, 24) is arranged on one side, i.e. on the same side in all filter compartments (17, 18), and that the base (27, 28) of each filter compartment (17, 18) slopes down towards the inlet (25, 26) of the corresponding overflow siphon (23, 24).

4. Filter according to Claim 3, characterised in that the several filter containers (31, 32) are of the same type and are replaceably mounted in the housing (14).

5. Filter according to one of Claims 1 - 4, characterised in that each overflow siphon (23, 24) has an approximately vertical outlet pipe (33, 34), which projects from the base (27, 28), contains the outlet (29, 30) at its lower end and preferably projects downwards over the base (27, 28).

6. Filter according to Claim 5, characterised in that the outlet pipe (33, 34) is an integral part of the base (27, 28).

7. Filter according to one of Claims 1 - 6, characterised in that each overflow siphon (23, 24) has a valve pipe (35, 36), which is closed at the top and inverted over the outlet pipe (39, 40) to leave a radial annular area (37, 38) in such a way that the closed upper side (39, 40) of the valve pipe (35, 36) extends at a distance above the open upper end of the outlet pipe (33, 34) to leave an axial overflow area (41, 42).

8. Filter according to Claim 7, characterised in that the upper side (39, 40) of the valve pipe (35, 36) extends on a downward slope to the filter container (31, 32).

9. Filter according to Claim 7 or 8, characterised in that on its upper side (39, 40), the valve pipe (35, 36) has upwardly projecting guide walls (43, 44), which define a sloping water channel.

10. Filter according to one of Claims 7 - 9, characterised in that on its upper side, the valve pipe (35, 36) has an approximately shovel-like cross-section.

11. Filter according to one of Claims 7 - 10, characterised in that the valve pipe (35, 36) is provided with openings on the base side in its pipe shell, which form the inlet (25, 26) of the overflow siphon (23, 24).

12. Filter according to Claim 11, characterised in that the openings have an approximately arch-like shape.

13. Filter according to one of Claims 7 - 12, characterised in that the valve pipe (35, 36) is detachably inserted.

14. Filter according to one of Claims 1 - 13, characterised in that on its side wall portions, the base chamber (15) has raised support webs (45, 46), on which the filter compartment (18) located above it, in particular its filter container (32), is vertically supported.

15. Filter according to one of Claims 3 - 14, characterised in that the filter containers (31, 32) are placed vertically one above the other and support one another.

16. Filter according to one of Claims 1 - 15, characterised in that the pump (21) is arranged inside the base chamber (15).

17. Filter according to one of Claims 1 - 16, characterised in that the pipe (22), which is connected to the pump (21) and through which the water may be pumped out of the base chamber (15) back into the aquarium tank (11), is directed centrally through the housing (14) and from the pump (21) through the filter compartment or compartments (17, 18), in particular filter containers (31, 32), to approximately the level of the feed pipe (20), and is preferably directed right through a housing wall (47) to the outside.

18. Filter according to one of Claims 7 - 17, characterised in that the individual filter containers (31, 32) have pipe portions (48, 49) projecting upwards from their bases (27, 28) and preferably integral thereto, and that the pipe (22) is directed upwards through an opening (52, 53) in the base (27, 28) and through the pipe portion (48, 49) of each filter container (31, 32).

19. Filter according to Claim 18, characterised in that at the its upper end, which preferably projects above the upper edge of the filter container (31, 32), each pipe portion (48, 49) has a manually operated handle (50, 51).

20. Filter according to one of Claims 1 - 19, characterised in that in its outlet area, the pipe (22) has a movable and adjustable outlet connection (54).

21. Filter according to Claim 20, characterised in that the outlet connection (54) is formed from two integral pipe sections (55, 56) at an obtuse angle to one another.

22. Filter according to Claim 20 or 21, characterised in that the outlet connection (54) is adjustably held by means of a ball-and-socket joint (57).

23. Filter according to Claim 22, characterised in that the ball-and-socket joint (57) has a pipe portion (58) with ball socket (59) and on the outlet connection (54) has a ball segment (60) received in the ball socket (59).

24. Filter according to Claim 23, characterised in that the pipe portion (58) with ball socket (59) and outlet connection (54) disposed therein is detachably inserted into a recess (61) in a housing wall (47) which is preferably open to the top.

25. Filter according to one of Claims 1 - 24, characterised in that the outlet connection (54) is arranged at a distance above the feed pipe (20).

26. Filter according to one of Claims 1 - 25, characterised by at least one by-pass pipe (62) connecting the base chamber (15) to the feed pipe (20).

27. Filter according to Claim 26, characterised in that at the end leading into the base chamber (15), the by-pass pipe (62) has a valve arrangement (63) controlled by means of a float (64).

28. Filter according to Claim 27, characterised in that the valve arrangement (63) has a float ball (64), which closes or opens the opening (65) of the pipe end of the by-pass pipe (62) depending on the water level in the base chamber (15) and the float position.

29. Filter according to Claim 28, characterised in that the float ball (64) is contained to move freely in a cage (66) at the pipe end of the by-pass pipe (62).

30. Filter according to Claim 28 or 29, characterised in that base webs (67) projecting upwards from the base (16) of the base chamber (15) allow the float ball (64) to be supported vertically in the opening position.

31. Filter according to one of Claims 26 - 30, characterised in that the by-pass pipe (62) is formed from individual intermeshing pipe sections (68, 69) arranged, preferably integrally, on the filter containers (31, 32).

32. Filter according to one of Claims 1 - 31, characterised in that the feed pipe (20) has an approximately box-shaped cage (70) preferably detachably inserted above the uppermost filter compartment (17), in particular filter container (31), the front wall (71) and/or sloping side wall (72), for example, of said cage (70) having openings (73), e.g. slots, to allow adjacent water to enter the cage (70).

33. Filter according to Claim 32, characterised in that an outlet opening (75) is provided near the base in an inner transverse wall (74) of the cage (70), the size of said outlet opening (75) determining the quantity of water fed into the upper filter compartment (17), in particular into the upper filter container (31).

34. Filter according to Claim 32 or 33, characterised in that a guide channel (76) with an approximately U-shaped cross-section, for example, leading to the interior is connected to the inner transverse wall (74) for the water to be supplied.

35. Filter according to one of Claims 32 - 34, characterised in that on its underside, the cage (70) has a connecting branch (78), which surrounds a base opening (77) and to which the by-pass pipe (62) may be connected by a pipe section (68) of the uppermost filter compartment (17), in particular of the filter container (31).

36. Filter according to one of Claims 1 - 35, characterised by an outer channel (79) closed off from the interior of the housing (14), which extends approximately from the base level of the housing (14) and leads upwards, and to the upper end of which the cage (70) of the feed pipe (20) is connected.

37. Filter according to Claim 36, characterised in that openings (80), e.g. slots, are provided at least in the lower area of the outer channel (79) to allow adjacent water to enter the outer channel (79) there.

38. Filter according to one of Claims 1 - 37, characterised in that the housing (14) is covered at the upper end by means of a detachable cover (81).

39. Filter according to Claim 38, characterised in that the cover (81) is itself an insulating plate or is provided with an insulating plate (82).

40. Filter according to one of Claims 1 - 39, characterised by the construction as an internal filter which may be arranged in the aquarium tank (11).

41. Filter according to one of Claims 1 - 40, characterised by a suspension mounting (12), which has approximately mushroom-shaped projections (83) as well as a respective fastening plate (85) containing an angular suspension slot (87) with a vertical insertion slot (88), which merges into a preferably narrower horizontal locking slot (89).

42. Filter according to Claim 41, characterised in that the horizontal locking slot (89) has a catch arrangement to lock the inserted projection (83) in position.

43. Filter according to Claim 41 or 42, characterised in that the approximately mushroom-shaped projections (83) are e.g. detachably arranged on a housing wall (86), and that the respective fastening plate (85) may be fastened, e.g. glued, to a wall (13) of the aquarium.

44. Filter according to one of Claims 1 - 43, characterised by the plastic construction.

## Revendications

1. Filtre pour aquariums, avec un bâti (14), dans lequel, au-dessus d'une chambre inférieure (15), est contenu au moins un compartiment de filtrage (17, 18) destiné au matériau de filtrage, auquel de l'eau peut être amenée, depuis le haut, par une amenée (20), et être amenée, après avoir passé le au moins un compartiment de filtrage (17, 18), à la chambre inférieure (15), et être aspirée, depuis cette dernière, au moyen d'une pompe (21) et être recyclée dans l'aquarium (11), par l'intermédiaire d'une conduite (22) raccordée à la pompe, le filtre (10) travaillant alternativement en écoulement montant-descendant, caractérisé en ce que chaque compartiment de filtrage (17, 18) présente au moins un dispositif de siphonnage du trop plein (23, 24), dont l'admission (25, 26) est disposée côté pied et à peu près au niveau du fond (27, 28) du compartiment de filtrage (17, 18), et dont l'évacuation (29, 30) débouche vers le bas, en un compartiment de filtrage (18) subséquent ou à la chambre inférieure (15), et en ce que chaque compartiment de filtrage (17, 18) présente un récipient de filtrage (31, 32) réalisé à peu près sous forme de cuve ouverte.

2. Filtre selon la revendication 1, caractérisé par deux ou plusieurs compartiments de filtrage (17, 18) de même type, disposés les uns au-dessus des autres, pour lesquels l'évacuation (29) du dispositif de siphonnage de trop-plein (23) du compartiment de filtrage (17) de dessus débouche dans le compartiment de filtrage (18) sous-jacent et constitue pour celui-ci (18) l'amenée d'eau et l'évacuation (30) du compartiment de filtrage (18) de dessous débouchant dans la chambre inférieure (15).

3. Filtre selon la revendication 1 ou 2, caractérisé en ce que le dispositif de siphonnage de trop-plein (23, 24) est disposé pour chaque compartiment de filtrage (17, 18) d'un premier côté et du même côté pour tous les compartiments de filtrage (17, 18), et en ce que le fond (27, 28) de chaque compartiment de filtrage (17, 18) allant en descendant obliquement vers l'admission (25, 26) du dispositif de siphonnage de trop-plein (23, 24) associé.

4. Filtre selon la revendication 3, caractérisé en ce que les différents récipients de filtrage (31, 32) sont de même type et fixés dans le bâti (14) de manière à pouvoir être échangés.

5. Filtre selon l'une des revendications 1 à 4, caractérisé en ce que chaque dispositif de siphonnage de trop-plein (23, 24) présente un tube d'évacuation (33, 34) à peu près vertical, se projetant depuis le fond (27, 28), dont l'extrémité inférieure contient l'évacuation (29, 30) et, de préférence, fait saillie vers le bas au-dessus du fond (27, 28).

6. Filtre selon la revendication 5, caractérisé en ce que le tube d'évacuation (33, 34) est une partie, formant un seul tenant, du fond (27, 28).

7. Filtre selon l'une des revendications 1 à 6, caractérisé en ce que chaque dispositif de siphonnage de trop-plein (23, 24) présente un tube de soupape (35, 36) fermé du côté supérieur, retourné en laissant un espace annulaire (37, 38) radial et au-dessus du tube d'évacuation (33, 34), de manière que la face supérieure fermée (39, 40) du tube de soupape (35, 36) s'étende, en laissant un espace de déversement (41, 42) axial, à distance et au-dessus de l'extrémité supérieure ouverte du tube d'évacuation (33, 34).

8. Filtre selon la revendication 7, caractérisé en ce que la face supérieure (39, 40) du tube de soupape (35, 36) s'étend obliquement, avec une pente, par rapport au récipient de filtrage (31, 32)

9. Filtre selon la revendication 7 ou 8, caractérisé en ce que le tube de soupape (35, 36) présente en face supérieure (39, 40) des parois de guidage (43, 44) dépassant vers le haut et délimitant une goulotte de guidage d'eau orientée obliquement.

10. Filtre selon l'une des revendications 7 à 9, caractérisé en ce que le tube de soupape (35, 36) est en face supérieure d'une section transversale à peu près en forme de godet.

11. Filtre selon l'une des revendications 7 à 10, caractérisé en ce que le tube de soupape contient dans son enveloppe tubulaire des passages situés du côté pied, constituant l'admission (25, 26) du dispositif de siphonnage de trop-plein (23, 24).

12. Filtre selon la revendication 11, caractérisé en ce que les passages ont une forme à peu près en cintre de porte.

13. Filtre selon l'une des revendications 7 à 12, caractérisé en ce que le tube de soupape (35, 36) est inséré amovible.

14. Filtre selon l'une des revendications 1 à 13, caractérisé en ce que la chambre inférieure (15) présente sur ses parties de paroi latérales des nervures d'appui (45, 46) guidant vers le haut, sur lesquelles le compartiment de filtrage (18) se trouvant au-dessus, en particulier le récipient de filtrage (32), prend appui verticalement.

15. Filtre selon l'une des revendications 3 à 14, caractérisé en ce que les récipients de filtrage (31, 32) sont insérés les uns dans les autres, en direction verticale, et se soutiennent mutuellement.

16. Filtre selon l'une des revendications 1 à 15, caractéri sé en ce que la pompe (21) est disposée à l'intérieur de la chambre inférieure (15).

17. Filtre selon l'une des revendications 1 à 16, caractérisé en ce que la conduite (22) raccordée à la pompe, par l'intermédiaire de laquelle l'eau venant de la chambre inférieure (14) est recyclable par pompage dans le bassin d'aquarium (11), est guidée centralement à travers le bâti (14) et depuis la pompe (21), en passant à travers le ou les compartiments de filtrage (17, 18), en particulier les récipients de filtrage (31, 32), jusqu'à peu près au niveau de l'amenée (20), et, de préférence guidée vers l'extérieur en passant à travers une paroi de bâti (27).

18. Filtre selon l'une des revendications 7 à 17, caractérisé en ce que les différents récipients de filtrage (31, 32) présentent des parties tubulaires (48, 49), se projetant depuis leur fond (27, 28), réalisées de préférence d'un seul tenant avec eux, et en ce que la conduite (22) est guidée vers le haut, à travers une ouverture (52, 53) ménagée dans le fond (27, 28) et à travers la partie tubulaire (48, 49) de chaque récipient de filtrage (31, 32).

19. Filtre selon la revendication 18, caractérisé en ce que chaque partie tubulaire (48, 49) présente à son extrémité supérieure, dépassant de préférence sur le bord supérieur du récipient de filtrage (31, 32), une poignée (50, 51) destinée à saisir avec la main.

20. Filtre selon l'une des revendications 1 à 19, caractérisé en ce la conduite (22) présente dans sa zone d'évacuation une tubulure d'évacuation (54) mobile et réglable.

21. Filtre selon la revendication 20, caractérisé en ce que la conduite la tubulure d'évacuation (54) est constituée de deux pièces tubulaires (55, 56), formant ensemble une seule pièce, orientées suivant un angle obtus l'une par rapport à l'autre.

22. Filtre selon l'une des revendications 20 ou 21, caractérisé en ce que la tubulure d'évacuation (54) est maintenue, réglable, au moyen d'une articulation sphérique (57).

23. Filtre selon la revendication 22, caractérisé en ce que l'articulation sphérique (57) présente une partie tubulaire (58) avec une cuvette sphérique (59) et, sur la tubulure d'évacuation (54), un segment sphérique (60) reçu dans la cuvette sphérique (59).

24. Filtre selon la revendication 23, caractérisé en ce que la partie tubulaire (58), avec la cuvette sphérique (59) et la tubulure d'évacuation (54) placée à l'intérieur, est insérée amovible dans un logement (61), de préférence ouvert vers le haut, ménagé dans une paroi de bâti (47).

25. Filtre selon l'une des revendications 1 à 24, caractérisé en ce que la tubulure d'évacuation (54) est disposée à distance au-dessus de l'amenée (20).

26. Filtre selon l'une des revendications 1 à 25, caractérisé par au moins une conduite de dérivation (62), reliant la chambre inférieure (15) à l'amenée (20).

27. Filtre selon la revendication 26, caractérisé en ce que la conduite de dérivation (62) présente à l'extrémité assurant le guidage dans la chambre inférieure (15) un dispositif à soupape (63), commandé au moyen d'un flotteur (64).

28. Filtre selon la revendication 27, caractérisé en ce que le dispositif à soupape (63) présente une sphère de flotteur (64) qui, selon le niveau de l'eau dans la chambre inférieure (15) et la position de flottaison, obture ou libère l'ouverture (65) de l'extrémité de la conduite de dérivation (62).

29. Filtre selon la revendication 28, caractérisé en ce que la sphère de flotteur (64) est maintenue mobile librement dans une cage (66) montée à l'extrémité de la conduite de dérivation (62).

30. Filtre selon la revendication 28 ou 29, caractérisé en ce que des nervures formant pied (67), au moyen desquelles la sphère de flotteur (64) peut être soutenue verticalement dans la position d'ouverture, montent depuis le fond (16) de la chambre inférieure (15).

31. Filtre selon l'une des revendications 26 à 30, caractérisé en ce que la conduite de dérivation (62) est constituée de différentes pièces tubulaires (68, 69) s'engageant les unes dans les autres, réalisées sur les récipients de filtrage (31, 32), de préférence d'un seul tenant avec eux.

32. Filtre selon l'une des revendications 1 à 31, caractérisé en ce que l'amenée (20) présente une cage (70) quelque peu en caisson, insérée de préférence de façon amovible au-dessus du compartiment de filtrage de dessus (17), en particulier du récipient de filtrage de dessus (31), cage dont la paroi avant (71) et/ou, par exemple, la paroi latérale (72) oblique présente(nt) des passages (73), par exemple des fentes, pour l'admission d'eau environnante dans la cage (70).

33. Filtre selon la revendication 32, caractérisé en ce que la cage (70) contient, dans une paroi transversale (74) intérieure, près du fond, une ouverture d'évacuation (75), dont la taille détermine le débit d'amenée d'eau dans le compartiment de filtrage de dessus (17), en particulier le récipient de filtrage (31) de dessus.

34. Filtre selon la revendication 32 ou 33, caractérisé en ce qu'une goulotte de guidage (76) à peu près en U, destinée à l'amenée d'eau et menant plus à l'intérieur, se raccorde à la paroi transversale intérieure (74).

35. Filtre selon l'une des revendications 32 à 34, caractérisé en ce que la cage (70) présente en face inférieure une tubulure de raccordement (78) entourant une ouverture de fond (77) et à laquelle la conduite de dérivation (62) peut être raccordée à une pièce tubulaire (68) du compartiment de filtrage (17) de dessus, en particulier le récipient de filtrage (31) de dessus.

36. Filtre selon l'une des revendications 1 à 35, caractérisé par un canal extérieur (79), isolé vis à vis de l'intérieur du bâti (14) et partant à peu près du niveau du fond du bâti (14) et guidant vers le haut et raccordé à son extrémité supérieure à la cage (70) de l'amenée (20).

37. Filtre selon la revendication 36, caractérisé en ce qu'au moins dans la zone inférieure du canal extérieur (79) sont prévus des passages (80), par exemple des fentes, pour l'admission locale d'eau environnante dans le canal extérieur (79).

38. Filtre selon l'une des revendications 1 à 37, caractérisé en ce que le bâti (14) est recouvert à l'extrémité supérieur au moyen d'un couvercle (81) amovible.

39. Filtre selon la revendication 38, caractérisé en ce que le couvercle (81) lui même est réalisé sous forme de plaque isolante ou pourvu d'une plaque isolante (82).

40. Filtre selon l'une des revendications 1 à 39, caractérisé par la réalisation sous forme de filtre interne, à disposer dans le bassin d'aquarium (11).

41. Filtre selon l'une des revendications 1 à 40, caractérisé par une fixation suspendue (12), présentant, d'une part, des saillies (83) à peu près en forme de champignons et, d'autre part, chacune une plaque de fixation (85) associée, contenant une fente d'accrochage (87) angulaire, avec une fente d'introduction (88) verticale, se transformant en une fente de verrouillage (89) horizontale, de préférence plus étroite.

42. Filtre selon la revendication 41, caractérisé en ce que la fente de verrouillage (89) horizontale présente un dispositif à déclic pour l'encliquetage de la saillie (83) insérée.

43. Filtre selon la revendication 41 ou 42, caractérisé en ce que les saillies (83), à peu près en forme de champignons, sont prévues, par exemple, amovibles sur une paroi de bâti (86) et en ce que chaque plaque de fixation (86) associée peut être fixée, par exemple collée, sur une paroi d'aquarium (13).

44. Filtre selon l'une des revendications 1 à 40, caractérisé en ce qu'il est réalisé en matière synthétique.
